# EUROPÄISCHE PATENTSCHRIFT

(11) **EP 1 272 283 B1**
(45) Veröffentlichungstag und Bekanntmachung des Hinweises auf die Patenterteilung: **26.03.2008**
(21) Anmeldenummer: 01925432.5
(22) Anmeldetag: 13.03.2001
(51) Int. Cl.: B05D 3/06, C09J 7/02

(54) **ELEKTRONENSTRAHL-VERNETZUNG VON HAFTKLEBEMASSEN**
CROSS LINKAGE OF PRESSURE-SENSITIVE ADHESIVE SUBSTANCES BY MEANS OF ELECTRON BEAMS
RETICULATION DE MATIERES AUTO-ADHESIVES PAR FAISCEAUX ELECTRONIQUES

(30) Priorität: 23.03.2000 DE 10014563
(43) Veröffentlichungstag der Anmeldung: 08.01.2003
(73) Patentinhaber: tesa AG, 20253 Hamburg (DE)
(72) Erfinder: DIETZ, Bernd, 22949 Ammersbek (DE); HUSEMANN, Marc, 22605 Hamburg (DE); KARMANN, Werner, 22147 Hamburg (DE); KLOSE, Maren, 21217 Seevetal (DE); NEUHAUS-STEINMETZ, Hermann, 22926 Ahrensburg (DE)
(86) Internationale Anmeldenummer: PCT/EP2001/002792
(87) Internationale Veröffentlichungsnummer: WO 2001/070894

(56) Entgegenhaltungen:
- EP-A- 0 453 254
- WO-A-00/47684

## Beschreibung

Die Erfindung betrifft ein Verfahren zur Elektronenstrahlvernetzung von Haftklebebändern unter Vermeidung der Schädigung der Trennschicht auf der Rückseite.

Die Gebrauchseigenschaften von Klebebändern werden ganz wesentlich von den Eigenschaften der Haftklebemasse (PSA) bestimmt. Diese besteht aus zumindest einem hochmolekularen Elastomer und gegebenenfalls einem oder mehreren die Klebrigkeit bestimmenden Harzen sowie weiteren Zusätzen zur Modifizierung der Eigenschaften, Verbesserung der Stabilität u.a. Für weitergehende Informationen über die Zusammensetzung. Herstellung und Eigenschaften der Klebebänder sei auf den Artikel "Tapes, Adhesive" in Ullmann's Encyclopedia of Industrial Chemistry, Sixth Edition. 2000 Electronic Release. Wiley-VCH, Weinheim 2000 hingewiesen.
Zur Herstellung der Klebebänder werden die Klebemassen in einer oder mehreren dünnen Schichten auf geeignete Trägermaterialien wie Folien. Papiere. Vliese, Gewebe u.a. aufgetragen. Dafür müssen sie in einen fließfähigen Zustand passender Viskosität überführt werden, was durch Auflösen in Lösungsmitteln, Dispergieren in Flüssigkeiten oder bei den sogenannten Hotmelts durch Aufschmelzen bei erhöhten Temperaturen erreicht werden kann. Anschließend werden diese Beschichtungen durch Verdampfen des Lösungs- oder Dispergiermittels oder durch Abkühlen der Hotmelts zum Haftkleber verfestigt. Insbesondere die Hotmelts, aber auch die übrigen Haftkleber verlieren durch Erhitzen wieder ihre Festigkeit, wodurch der Einsatzbereich begrenzt wird.
Das ist durch Vernetzung zu vermeiden, so daß hierdurch der Einsatzbereich .der damit hergestellten Klebebänder erweitert wird. Unter Vernetzung werden alle Reaktionen verstanden, die zu einer chemischen Bindung zwischen den Polymerketten des Elastomers führen. Das kann durch chemisch oder strahlenchemisch ausgelöste Reaktionen erreicht werden. Letztere können durch UV-Strahlung oder durch energiereiche Strahlung wie beschleunigte Elektronen (ESH) initiiert werden. Bevorzugt wird die Strahlenvernetzung (UV- und ESH-Technologie) angewandt, da diese Reaktionen sehr schnell verlaufen und keine thermisch labilen Gruppen benötigen. Ein weiteres Herstellungsverfahren von Haftklebemassen geht von reaktiven flüssigen Monomeren und Oligomeren aus, die durch Bestrahlung zu einem kohäsiven Haftkleber gehärtet werden. Eine Übersicht wurde von Karmann und Zöllner in "Radiation Curing of PSA - An Overview". RadTech Europe Maastricht 1995 gegeben.
Da zwischen der beschriebenen Vernetzung und Härtung keine grundsätzlichen Unterschiede bestehen, wird im folgenden beides als Vernetzung" bezeichnet.

Die UV-Technologie ist vom apparativen Aufwand relativ kostengünstig. Aber bedingt durch die benötigten Photoinitiatoren und die Lichtabsorption der Klebemassen ist die Vernetzung nicht uneingeschränkt durchführbar. So lassen sich z.B. transparente Acrylathaftklebebänder bis maximal etwa 100 g/m² effizient vernetzen. Bei harz- oder füllstoffhaltigen Klebemassen liegen die Grenzen wesentlich niedriger. Für Naturkautschukklebemassen ist die UV-Vernetzung noch ungünstiger.
Die ESH-Technologie ist hierfür bedeutend besser geeignet. Glücklicherweise gehören die meisten der für Haftkleber eingesetzten Polymere, wie die Polyacrylate, Naturkautschuk und andere Polydienkautschuke, Ethylenvinylacetat. Polydimethylsiloxane. zu denen, die unter dem Einfluß der Elektronenstrahlung vorwiegend vernetzen (siehe z.B. J.E. Wilson .,Radiation Chemistry of Monomers. Polymers, and Plastics" Marcel Dekker. Inc. New York 1974). Bei ausreichend hoher Beschleunigungsspannung der Elektronen werden auch Haftklebemassen mit Schichtstärken über einigen 100 g/m² unabhängig vor ihrer Zusammensetzung praktisch vollständig durchdrungen und vernetzt. Weitere Vorteile sind hierbei die Schnelligkeit dieser Prozesse, die geringeren Anforderungen an die Struktur und Zusammensetzung der zu vernetzenden Komponenten (UV-aktive Gruppen brauchen nicht vorhanden zu sein) und die genaue Regelbarkeit des Prozesses.
Dennoch besitzt diese Technologie auch Nachteile. Um eine gleichförmige Vernetzung der Klebemasse zu erreichen, muß das Klebeband ausreichend gleichmäßig durchstrahlt werden, so daß auch die Trägerfolien mit mehr oder weniger hohen Strahlendosen belastet werden. Dabei werden einige Polymere abgebaut, wodurch sie verspröden und an mechanischer Belastbarkeit verlieren. Andere Polymere verfärben sich während und nach der Bestrahlung. Eine besonders schwerwiegende Schädigung tritt an Releaseschichten auf, die häufig auf der Rückseite der Trägerfolien vorhanden sind, um nach dem Aufwickeln eine gezielte Einstellung der Abrollkraft zu erreichen: Nach Einwirkung der Bestrahlung verlieren sie an Wirksamkeit, wodurch die Abrollkräfte der Klebebänder inakzeptabel ansteigen. Das gilt insbesondere für Silikonschichten nach Lagerung bei erhöhten Temperaturen.
Eine Verringerung dieser Schädigung kann erreicht werden, wenn das Klebeband unter dem Elektronenbeschleuniger mit der Rückseite über eine Temperierplatte läuft oder auf einer metallischen Temperierwalze aufliegt, die als Strahlungsfänger dienen. Die Wirkung ist allerdings bei Strahlendosen über etwa 10 kGy unzureichend.
In der Patentanmeldung DE 198 46 902 A1 wird beschrieben, wie durch Wahl der Beschleunigungsspannung die von der Releaseschicht auf der Rückseite eines Releaseliners absorbierte Strahlendosis klein gehalten und die Klebmasseschicht mit einer wesentlich höheren Strahlendosis vernetzt werden kann. Die Möglichkeiten sind aber bei ungünstigen Dickenverhältnissen zwischen der Klebmasseschicht und dem Träger begrenzt.

Aufgabe der Erfindung ist es daher, ein Verfahren zur Flektronenstrahl-Vernetzung von Haftklebemassen zur Verfügung zu stellen, welches erlaubt, die Rückseitenschädigung der Releaseschichten zu vermeiden oder zumindest ganz wesentlich zu verringern, ohne dabei die für die Vernetzung der Klebmasseschicht erforderliche Strahlendosis einschränken zu müssen; auch bei ungünstigen Dickenverhältnissen zwischen Klebmasseschicht und Träger.

Überraschend und für den Fachmann unvorhersehbar wurde gefunden, daß entsprechend vorteilhaft vorgegangen werden kann, indem man während der Bestrahlung ein geeignetes Kontaktmedium zwischen der Rückseite des Klebebandes und der Walze insbesondere einer Temperierwalze, einbringt.

Demgemäß betrifft die Erfindung ein Verfahren zur Elektronenstrahlvernetzung einer Beschichtung von Haftklebemassen auf einem mit einen Releaseschicht ausgerüsteten Trägermaterial, wobei
- die auf dem Trägermaterial befindliche Haftkleberschicht mittels einer Bestrahlungsvorrichtung durch Elektronenstrahlung vernetzt wird, und
- das mit dem zu vernetzenden Haftklebesystem beschichtete Trägermaterial während der Bestrahlung über eine Walze läuft, dadurch gekennzeichnet, daß
- sich während der Bestrahlung zwischen der Walze und dem Träger ein Kontaktmedium befindet.

Das Kontaktmedium wird bevorzugt nach der Bestrahlung ganz oder teilweise von dem Trägermaterial entfernt.

Der Kontakt zwischen dem Trägermaterial und der Walze muß dabei in der vollen bestrahlten Fläche des mit dem Haftklebesystem versehenen Trägermaterials gewährleistet sein.

Erfindungsgemäß bevorzugt wird dieses Verfahren durchgeführt in einer Anlage, die aus einem Elektronenbeschleuniger, einer Walze, bevorzugt einer Temperierwalze, einem Fluidauftragswerk sowie gegebenenfalls einer Trocknungseinheit besteht.

Sehr vorteilhaft geht man vor, indem die Walze temperiert wird. Im folgenden sei in allen Fällen, in denen nur von der Walze gesprochen wird, die Temperierwalze als eine der bevorzugten Ausführungsformen ausdrücklich mit eingeschlossen. Die Temperierung der Walze liegt dabei bevorzugt in einem Bereich von -10 °C bis 200 °C. ganz besonders bevorzugt von 5 °C bis 150 °C.

Als Walze dient gewöhnlich eine geerdete Metallwalze, die die auftreffenden Elektronen und die dabei entstehende Röntgenstrahlung absorbiert. Sie ist bevorzugt mit einem wirksamen Temperiersystem ausgerüstet, um eine Energieabfuhr, insbesondere in form von Wärmeenergie, zu gewährleisten. Zur Verhinderung der Korrosion ist sie gewöhnlich mit einer Schutzschicht überzogen. Diese wird bevorzugt so ausgewählt, daß sie von dem Kontaktmedium gut benetzt wird. Im allgemeinen ist die Oberfläche leitfähig. Es kann aber auch günstiger sein, sie mit einer oder mehreren Schichten aus isolierendem oder halbleitendem Material zu beschichten.
Vorteilhaft für das erfinderische Verfahren einzusetzende Walzen sind Stahlwalzen, insbesondere solche, welche eine Beschichtung zur Verbessserung der Korrosionsbeständigkeit und/oder der Benetzbarkeit tragen, wobei diese Beschichtungen bevorzugt aus geeigneten Metallen (beispielsweise Chrom), Metalloxiden oder aus Keramik sind.

Das Kontaktmedium wird bei dem erfinderischen Verfahren vorteilhaft entweder auf die Rückseite des mit einer Releaseschicht ausgerüsteten Trägers oder auf die beschriebene Walze aufgetragen, es ist aber auch möglich, daß es berührungslos aufgebracht wird, zum Beispiel durch Aufsprühen. Während der Elektronenbestrahlung befindet sich das Kontaktmedium zwischen der Walze und dem mit einer Releaseschicht ausgerüsteten Trägermaterial.

Erfindungsgemäß wird als Kontaktmedium ein Material verwendet, weiches in der Lage ist, einen Kontakt zwischen dem Trägermaterial und der Walzenoberfläche herzustellen, d.h. ein Material, welches die Hohlräume zwischen Trägermaterial und Walzenoberfläche (beispielsweise Unebenheiten in der Walzenoberfläche. Blasen) ausfüllt.
Hierfür bieten sich fließfähige Materialien an, welche in einem weiten Viskositätsbereich vorliegen können. So kann das Kontaktmedium beispielsweise aus einer Haftklebemasse oder einem anderen Material bestehen, welches auf das Trägermaterial auffließt und somit die Luft zwischen Träger und Walze verdrängt.
Weiterhin können weiche, "anschmiegsame" Materialien als Kontaktmedium verwendet werden. Zum einen können in bevorzugter Weise weichelastische Materialien eingesetzt werden, wie beispielsweise Weichgummi. Weich-PVC, andere Weichkunststoffe und ähnliche Materialien: Wenn sie fest mit der Walze verbunden sind, müssen sie über ausreichende Strahlenbeständigkeit sowie bevorzugt ausreichende thermische und elektrische Leitfähigkeit aufweisen.
Es ist erfindungsgemäß besonders vorteilhaft, insbesondere bei Einsatz von Kontaktmedien mit nicht hinreichender Strahlenbeständigkeit, das Kontaktmedium nicht permanent auf der Walze zu belassen, sondern vor dem Bestrahlungsprozeß auf die Walze aufzubringen und nach dem Bestrahlungsprozeß von dieser wieder zu entfernen. Letzteres Prinzip kann zum Beispiel in ausgezeichneter erfindungsgemäßer Weise verwirklicht werden, indem es mit dem Trägermaterial in das Verfahren eingebracht wird, zum Beispiel in Form eines mit dem Trägermaterial auf die Walze auflaufenden Filmes. In einer weiteren günstigen Ausführungsform liegt das Kontaktmedium in Form eines austauschbaren Überzuges auf der Walze vor. Der Wechsel des Kontaktmediums kann während des Bestrahlungsprozesses (kontinuierlicher Wechsel) oder zwischen den einzelnen Bestrahlungsprozessen (diskontinuierlicher Wechsel) erfolgen. Durch den ständigen Austausch wird vermieden, daß dieses durch die laufende Bestrahlung so stark beeinträchtigt wird, daß es seine Funktion verliert.
Insbesondere bei ausreichender Strahlenbeständigkeit oder hinreichend geringer Strahlenbelastung kann es aber für entsprechende Varianten des erfinderischen Verfahrens ebenfalls vorteilhaft sein, wenn das Kontaktmedium permanent auf der Walze verbleibt.

Als erfindungsgemäß sehr vorteilhaft hat sich herausgestellt, als Kontaktmedium eine Flüssigkeit zu verwenden, die gegebenenfalls Additive für zusätzliche Funktionen enthält. Dazu gehören die Erhöhung der Benetzung und der elektrischen Leitfähigkeit sowie das Abfangen von Radikalen und anderen reaktiven Spezies, die von der absorbierten Strahlung erzeugt werden.

Als Kontaktflüssigkeit kann vorteilhaft Wasser eingesetzt werden, welches die erforderlichen Aufgaben der Erfindung zufriedenstellend erfüllt.
In einer weiteren Variante, welche im erfinderischen Sinne hervorragend geeignet ist, werden dem Kontaktmedium Substanzen zugesetzt, die darin zumindest teilweise löslich sind. Für Wasser als Kontaktmedium bieten sich als Zusätze beispielsweise Alkylalkohole wie Ethanol. Propanol, Butanol. Hexanol an, ohne sich durch diese Beispiele in der Auswahl der Alkohole einschränken zu wollen. Weiterhin sehr vorteilhaft sind insbesondere längerkettige Alkohole, Glykole. Polyglykole, Ketone, Amine, Carboxylate. Sulfonate und wasserlösliche Cellulosederivate.

Eine Absenkung der Oberflächenspannung kann auch durch den Zusatz geringer Mengen an nichtionischen und/oder anionischen und/oder kationischen Tensiden zu dem Kontaktmedium erreicht werden. Im einfachsten Fall lassen sich hierzu kommerzielle Spülmittel oder Seifenlösungen verwenden, bevorzugt in einer Konzentration von einigen g/l in Wasser als Kontaktmedium. Besonders geeignet sind spezielle Tenside, welche auch bei geringer Konzentration eingesetzt werden können. Hierfür seien beispielsweise Sulfoniumtenside (z.B. β-Di(hydroxyalkyl)sulfoniumsalz), weiterhin beispielsweise ethoxylierte Nonylphenylsulfonsäureammoniumsalze. Hier sei insbesondere verwiesen auf den Stand der Technik unter "surfactants" in Ullmann's Encyclopedia of Industrial Chemistry. Sixth Edition. 2000 Electronic Release. Wiley-VCH. Weinheim 2000.

Als Kontaktmedien können die vorgenannten Flüssigkeiten auch ohne den Zusatz von Wasser jeweils für sich oder in Kombination miteinander eingesetzt werden.
Zur Verbesserung der Eigenschaften des Kontaktmediums (beispielsweise zur Erhöhung der Scherresistenz. Verringerung der Übertragung von Tensiden oder dergleichen auf die Lineroberfläche und damit verbesserte Reinigungsmöglichkeiten des Endproduktes) können dem Kontaktmedium und/oder den eingesetzten Zusatzstoffen weiterhin vorteilhaft Salze, Gele und ähnliche viskositätssteigernde Additive zugesetzt werden.

Für den Fall einer Flüssigkeit als Kontaktmedium kann man in hervorragender Weise vorgehen, wenn eine zweite Walze (Antragswalze), vorteilhaft mit einer benetzbaren oder saugfähigen Oberfläche, durch ein Bad mit dem Kontaktmedium läuft, dabei mit dem Kontaktmedium benetzt oder getränkt wird und durch Berührung mit der ersten Walze einen Film dieses Kontaktmediums aufträgt beziehungsweise aufstreicht. Auch andere Ausführungsformen des Auftragswerks sind realisierbar.
Im folgenden wird der Begriff "Walze" für die erste Walze (Walze entsprechend der Einführung im Hauptanspruch, auch in der temperierbaren Ausführungsform) verwendet und die zweite Walze als Antragswalze bezeichnet. Eine im weiteren einzuführende dritte Walze (Andruckwalze) wird konsequent als Andruckwalze bezeichnet werden.

Typische Bestrahlungsvorrichtungen, die bei der erfindungsgemäßen Ausgestaltung des Verfahrens zum Einsatz kommen, stellen Linearkathodensysteme. Scannersysteme beziehungsweise Segmentkathodensysteme dar, sofern es sich um Elektronenstrahlbeschleuniger handelt. Eine ausführliche Beschreibung des Stands der Technik und der wichtigsten Verfahrensparameter findet man bei Skelhorne "Electron Beam Processing" in Vol. 1 "Chemistry & Technology of UV & EB Formulations for Coatings. Inks & Paints" publ. Sita Technology, London 1991.

Die Beschleunigungsspannungen liegen im Bereich zwischen 40 kV und 500 kV, vorzugsweise 80 kV bis 300 kV. Die angewandten Strahlungsdosen bewegen sich zwischen 5 bis 150 kGy, insbesondere 20 bis 100 kGy.
Das Heranführen der zu bestrahlenden Träger, d.h. der releasebeschichteten Materialien wie Papiere, Folien, Vliese (non wovens) und dergleichen, vergleiche weiter unten, ist vorteilhafterweise unter einem gewissen Andruck vorzunehmen. Hierdurch wird sichergestellt, daß einerseits keine Luftblasen zwischen der Trägerrückseite und der (ersten) Walze eingeschlossen werden, und andererseits die Menge der Kontaktflüssigkeit auf das notwendige Maß begrenzt wird.
Der Andruck kann durch Einstellung einer geeigneten Bahnspannung oder durch Anpressen bzw. Andrücken mit einer Andruckwalze erreicht werden. In diesem Fall muß die Oberfläche der Andruckwalze eine ausreichende Releasewirkung aufweisen, damit die auf der Oberfläche des Trägers befindliche Haftklebeschicht nicht hiermit verklebt. Weitere Möglichkeiten sind ein Anpressen durch Luftstrahl oder Luftkissen oder durch elektrostatische Kräfte.
Andruckwalzen können beispielsweise ebenfalls Stahlwalzen sein, geeignet sind weiterhin Keramikwalzen. Bevorzugt als Andruckwalze einzusetzen sind solche, welche aus elastischem Material gefertigt sind, insbesondere Gummiwalzen oder Silikongummiwalzen, oder solche, welche eine elastische beziehungsweise gummierte Oberfläche besitzen. Vorzugsweise beträgt die Gummihärte des Andruckwalzenmaterials oder der Andruckwalzenoberfläche 30 bis 100 shore (A), insbesondere 40 - 80 shore (A). Der Andruckwalzenbezug kann gemäß dem Stand der Technik aus EPDM. Viton oder Silikongummi oder anderen elastischen Materialien bestehen.

In einer vorteilhaften Variante des Verfahrens ist das Kontaktmedium elektrisch leitfähig oder wird unter und/oder nach Bestrahlung elektrisch leitfähig.

Eine Weiterentwicklung des erfindungsgemäßen Verfahrens zeichnet sich dadurch aus, daß die Walze und/oder die Oberfläche der Walze elektrisch leitfähig oder halbleitend sind. Die Vermeidung der Schädigung des Trägermaterials kann dadurch zusätzlich verbessert werden.
Sofern die Beschichtungswalze nicht aus einem in sich leitfähigen Material besteht, wie es z. B. bei Stahl oder einem anderen Metall der Fall ist, kann dem Walzenmaterial ein Additiv, welches für eine ausreichende Leitfähigkeit sorgt, zugesetzt werden. Dies kann durch Zugabe von Ruß oder Metallstäuben oder -partikeln oder durch Dotierung erreicht werden, wobei die Leitfähigkeit bevorzugt mindestens während der Elektronenbestrahlung gewährleistet ist.

Weiterhin ist es für das erfindungsgemäße Verfahren sehr günstig, wenn das Kontaktmedium und/oder die Walze und/oder die Oberfläche der Walze geerdet sind.

Des weiteren kann die Walze makroskopisch glatt sein oder eine gering strukturierte Oberfläche aufweisen. Es hat sich bewährt, wenn sie eine Oberflächenstruktur besitzt, insbesondere eine Aufrauhung der Oberfläche. Die Benetzung durch das Kontaktmedium kann dadurch verbessert werden.

In einer vorteilhaften Weiterentwicklung des erfinderischen Verfahrens wird das Kontaktmedium mittels eines Fluidauftragswerkes auf die Walze aufgetragen. Als sehr positiv für den Ablauf des erfindungsgemäßen Verfahrens hat es sich weiterhin herausgestellt, wenn auch das Fluidauftragswerk temperierbar ist.

Als mit diesem Verfahren in besonders vorteilhafter Weise vernetzbar lassen sich als Haftklebesystem Acrylat-, Naturkautschuk-, Synthesekautschuk-, Silikon- oder EVA-Kleber einsetzen, insbesondere von Vorteil sind aus dieser Gruppe die Acrylathaftklebemassen. Natürlich lassen sich mit dem Verfahren aber auch alle weiteren, dem Fachmann bekannten strahlenvernetzbaren Haftklebemassen verarbeiten, wie sie z.B im Handbook of Pressure Sensitive Adhesive Technology" von Donatas Satas (van Nostrand, New York 1989) aufgeführt sind.

Eine erfindungsgemäße Verwendung des nach einem der vorangehenden Ansprüche hergestellten vernetzten Haftklebesystems ist in besonders vorteilhafter Weise diejenige für ein Klebeband, wobei das Klebeband ein- oder beidseitig mit einer selbstklebenden Schicht ausgerüstet sein kann.
Ein derartiges Klebeband verliert durch die Vernetzung nicht seine günstigen Anwendungseigenschaften, insbesondere die Abrollfähigkeit.

Als Acrylathaftklebemassen lassen sich insbesondere elastomere (Co-)Polymere mit folgender Zusammensetzung einsetzen, ohne sich durch diese Angabe unnötig einschränken zu wollen:
(A) Acrylsäure und Methacrylsäure-Derivate der allgemeinen Formel CH₂=CH(R₁)(COOR₂) mit einem Anteil von 65-100 Gewichtsprozent, wobei R₁ = H oder CH₃ ist und R₂ = eine Alkylkette mit 2 - 20 C-Atomen,
(B) Vinylverbindungen mit funktionellen Gruppen (beispielsweise Malein-. Fumar- und/oder Itaconsäure, Maleinsäureanhydrid, Styrol, Styrol-Verbindungen. Vinylester, insbesondere Vinylacetat, Vinylalkohole, Vinylether, Acrylamide u.a.) mit einem Anteil von 0 - 35 Gewichtsprozent.

Für Naturkautschukklebemassen wird der Naturkautschuk bis zu einem Molekuiargewicht (Gewichtsmittel) nicht unter etwa 100.000 Dalton, bevorzugt nicht unter 500.000 Dalton gemahlen und additiviert. Auch Elektronenstrahl-vernetzbare Synthesekautschukktebemassen sind einsetzbar.
Zur Herstellung von Haftklebebändern werden diese Elastomere optional mit Vernetzern abgemischt: Geeignete Vernetzersubstanzen in diesem Sinne sind insbesondere bi- oder multifunktionelle Acrylate.

Weiterhin werden zur Herstellung von Haftklebemassen diese Elastomere optional mit zumindest einem Harz abgemischt.
Als zuzusetzende klebrigmachende Harze sind ausnahmslos alle vorbekannten und in der Literatur beschriebenen Klebharze einsetzbar, wenn sie zumindest eine teilweise Verträglichkeit mit dem Elastomer aufweisen. Genannt seien stellvertretend die Pinen-Inden- und Kolophoniumharze, deren disproportionierte, hydrierte, polymerisierte, veresterte Derivate und Salze, die aliphatischen und aromatischen Kohlenwasserstoffharze. Terpenharze und Terpenphenolharze sowie C5-. C9- sowie andere Kohlenwasserstoffharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.
Die Acrylathaftklebemassen können des weiteren mit einem oder mehreren Additiven wie Alterungsschutzmitteln, Lichtschutzmitteln. Ozonschutzmitteln, Fettsäuren. Harzen. Weichmachern, Treibmitteln, Keimbildnern und Beschleunigern abgemischt sein.
Weiterhin können sie mit einem oder mehreren Füllstoffen wie Fasern. Ruß, Zinkoxid. Titandioxid, Mikrovollkugeln, Kieselsäure, Silikaten und Kreide gefüllt sein, wobei auch der Zusatz von blockierungsfreien Isocyanaten möglich ist.
Bei Kautschuk/Synthesekautschuk als Ausgangsmaterial für den Kleber sind weite Variationsmöglichkeiten gegeben, sei er aus der Gruppe der Naturkautschuke oder der Synthesekautschuke oder sei er aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.
Weiterhin vorzugsweise können Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.
Als ebenfalls zuzusetzende Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette. Phthalate, funktionalisierte Acrylate.

Die auf diese Weise abgemischten Haftklebemassen werden aus Lösung oder als Hotmelt auf einen mit einer Releaseschicht ausgerüsteten Träger (PP. BOPP, PET, Vlies. PVC. Polyester. Polyimid. Schaum etc.) oder Trennpapier (Glassine. HDPE, LDPE etc.) direkt aufgetragen oder umlaminiert (Träger und Trennpapiere sind Trägermaterialien im Sinne der Ansprüche).

Das Haftklebeband wird zur Vernetzung über eine mit dem Kontaktmedium versehene Walze geführt. Bevorzugt wird Wasser verwendet, dessen Wirksamkeit durch Zusatz der oben beschriebenen Additive verbessert werden kann. Der Kontaktflüssigkeitsfilm auf der Walze gleicht dabei Unebenheiten der Walzenoberfläche und Träger aus und vermeidet so Hohlräume zwischen der Walze und dem Trägermaterial.
Das Haftklebeband wird direkt auf dieser Walze mit Elektronenstrahlen bestrahlt. Die Beschleunigungsspannung wird derart gewählt, daß die Elektronen das Haftklebeband praktisch vollständig durchdringen.
Bei Anwesenheit des die Hohlräume ausfüllenden Flüssigkeitsfilms und unter Verwendung der beschriebenen erfindungsgemäßen Vorgehensweise wird die Schädigung der mit einer Releaseschicht ausgerüsteten Rückseite des Trägermaterials ganz vermieden oder zumindest deutlich herabgesetzt. Durch die Eliminierung oder Verringerung der Rückseitenschädigung bleibt das Abrollverhalten des Haftklebebandes erhalten oder verschlechtert sich nur geringfügig.

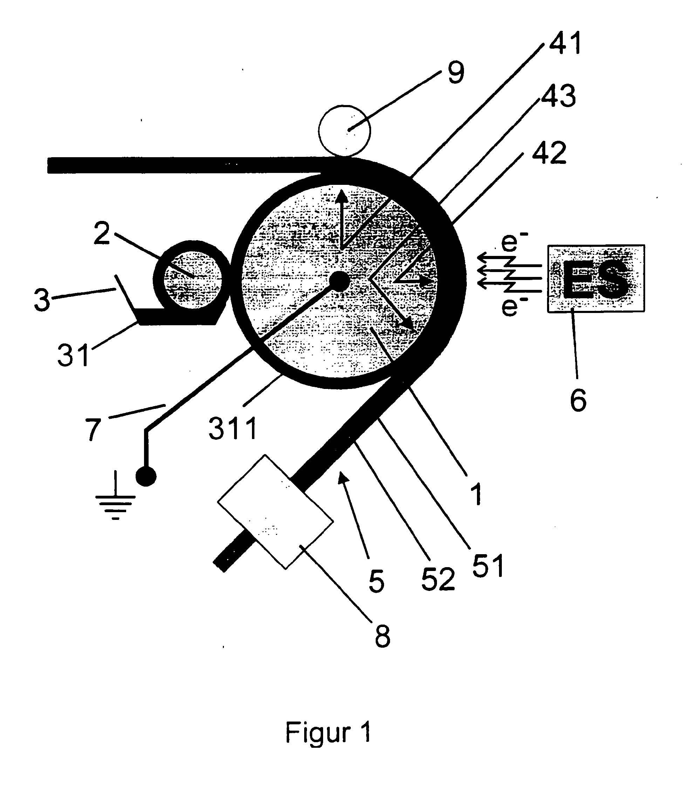

Die Versuchsanordnung für die Elektronenstrahl-Härtung der beschriebenen Haftklebebänder, also die Vernetzung durch Bestrahlung mit Elektronen, ist in Figur 1 dargestellt.
In dem in diesem Beispiel gewählten und in Figur 1 gezeigten Aufbau ist eine von vielen möglichen Ausführungsformen der Vernetzungsanlage beispielhaft gezeigt, ohne damit eine unnötige Einschränkung vornehmen zu wollen.
Die Temperierwalze 1 wird durch Kontakt mit einer zweiten Walze 2. welche sich zum Teil in einem Becken 3 mit dem Kontaktmedium 31 befindet, ebenfalls mit einem film 311 des Kontaktmediums benetzt. Als Kontaktmedium 31 wird bevorzugt Wasser eingesetzt, dem optional die oben genannten Additive zugesetzt werden. Die Temperierwalze 1 kann zur Ausbildung eines stabilen Wasserfilms 311 eine strukturierte Oberfläche besitzen. Diese Oberfläche kann durch Aufrauhung, ähnlich den Verhältnissen bei einer Gravurwalze, erzielt werden, aber auch bei makroskopisch glatten Oberflächen ist durch die mikroskopische Oberflächenrauhigkeit eine hinreichende Benetzung mit dem Kontaktmedium 311 festzustellen.

Die Position 41. von der das mit einer Releaseschicht ausgerüstete Haftklebeband (das mit der Haftklebemasse 51 beschichtete Trägermaterial 52) eingeführt wird, ist variabel, in der Darstellung wird das Haftklebeband in der 12 Uhr-Position (41) auf die Walze aufgelegt und zusätzlich mit einer Andruckwalze 9 angepreßt. Die Bestrahlungseinheit 6 befindet sich in der 3 Uhr-Position (42). Auch die Position 42 der Elektronen-Strahlungsquelle 6 kann entsprechend der Haftklebebandführung unterschiedlich gewählt werden, das Haftklebeband 5 sollte aber zumindest im Bestrahlungsfenster (42) vollständigen Kontakt mit dem Flüssigkeitsfilm 311 auf der Temperierwalze 1 besitzen. Das Haftklebeband 5 verläßt die Temperierwalze 1 in der 5 Uhr-Position (43); auch diese Position kann in den verschiedenen Ausführungsformen der Anlage unterschiedlich positioniert sein.
Zum zusätzlichen Ableiten der Ladung kann die Temperierwalze 1 geerdet sein (7). Zusätzlich kann auch die flüssigkeitsspeisende Walze 2 geerdet werden, um unnötige elektrische Spannungen und damit einen Stromfluß beziehungsweise Kriechströme in der Anlage zu vermeiden.
Nach erfolgter Bestrahlung und dem Verlassen der Temperierwalze 1 durchläuft das Klebeband 5 eine Trocknungseinheit 8, um das Kontaktmedium 311 wieder ganz oder teilweise von dem Trägermaterial 52 zu entfernen. Die Trocknung kann dabei thermisch, durch Bestrahlung mit IR-Strahlung und/oder Strahlung eines anderen Wellenlängenbereichs oder mechanisch (durch Abstreifen, Abwischen usw.) geschehen. Möglich ist auch eine Trocknung im Luftstrom, aber auch jede weitere Trocknungsmethode.

Zur Dokumentation der Erfindung wurden die nachfolgend dargestellten Versuchsreihen durchgeführt, ohne sich dabei durch die Wahl der Beispiele unnötig beschränken zu wollen.

### Beschreibung der durchgeführten Versuche

### Herstellung der Acrylathaftklebemasse

Ein für radikalische Polymerisationen konventioneller 200 L-Reaktor wurde mit 2400 g Acrylsäure. 3200 g N-tert.-Butylacrylamid, 4000 g Methylacrylat, 30,4 kg 2-Ethylhexylacrylat, und 30 kg Aceton/lsopropanol (97:3) befüllt. Nach 45 Minuten Durchleiten mit Stickstoffgas unter Rühren wurde der Reaktor auf 58 °C hochgeheizt und 20 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt.

Nach 1 h Reaktionszeit wurde wiederum 20 g AIBN hinzugegeben. Die Reaktion wurde nach 48 h Reaktionszeit abgebrochen und auf Raumtemperatur abgekühlt.

### Herstellung des Prüfbandes

Die Klebemasse wurde dann an einer Standardanlage auf 23 µm PET-Folie (Mylar® der Firma Du Pont) aufgetragen und getrocknet (die eingesetzten Anlagen sind beschrieben im Abschnitt "Produktionsverfahren" in "Tapes, Adhesive" in Ullmann's Encyclopedia of Industrial Chemistry, Sixth Edition, 2000 Electronic Release, Wiley-VCH, Weinheim 2000). Die Auftragsmenge betrug etwa 50 g/m². Vor dem Aufwickeln wurde die Klebmasse mit silikonisiertem Trennpapier der Firma Lauffenberg eingedeckt. Anschließend wurde dieser Verbund an einer Schneidanlage in 1,9 cm breite Streifen geschnitten und zu Rollen gewickelt.

### Elektronenbestrahlung

Die Elektronenbestrahlung erfolgte mit einem Gerät der Fa. Electron Crosslinking AB, Halmstad, Schweden. Das zu bestrahlende Trennpapier (Glassinpapier mit 1,2 g/m² Poly(dimethyl)siloxan der Firma Laufenberg) wurde dabei über eine standardmäßig vorhandene Temperierwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 m/min. Für das erfindungsmäßig bestrahlte Material wurde die Temperierwalze durch eine Spezialwalze mit benetzbarer Oberflächenbeschichtung und einem Antragswerk für die Kontaktflüssigkeit entsprechend der Figur 1 ersetzt. Das Trennpapier wurde mit einer gummierten Andruckwalze (60 shore A) angepreßt, so daß Lufteinschlüsse vermieden wurden. Die Dicke des Flüssigkeitsfilms betrug dabei etwa 0,01 bis 0,1 mm. Die weiteren Verfahrensparameter sind in der folgenden Tabelle angegeben.

### Messung der Trennkraft

Etwa 1h nach der Bestrahlung wurden Streifen des Prüfbandes mit der Klebmasse auf die der Temperierwalze zugewandten Seite des bestrahlten Trennpapiers blasenfrei aufgelegt und mit einer 2 kg Stahlrolle angepreßt. Anschließend wurde dieser Verbund gelagert, und zwar entweder 1 Tag bei Raumtemperatur (etwa 20 °C) (Bezeichnung: 1d RT) oder 7 Tage bei 70 °C (Bezeichnung: 7d 70 °C).
Zur Messung der Abzugskraft (Trennkraft) wurde die Seite des Prüfbands auf einer Stahlschiene fixiert und das darauf verklebte Trennpapier unter einem Winkel von 180° mit einer Geschwindigkeit von 300 mm/min abgezogen. Die dafür erforderliche Zugkraft (in cN/cm) wurde an einer Zugprüfmaschine bei standardisierten Bedingungen (23 °C. 50 % Luftfeuchtigkeit) gemessen.

### Ergebnisse:

Die Bedingungen und die Ergebnisse der Versuche sind in der folgenden Tabelle zusammengestellt.

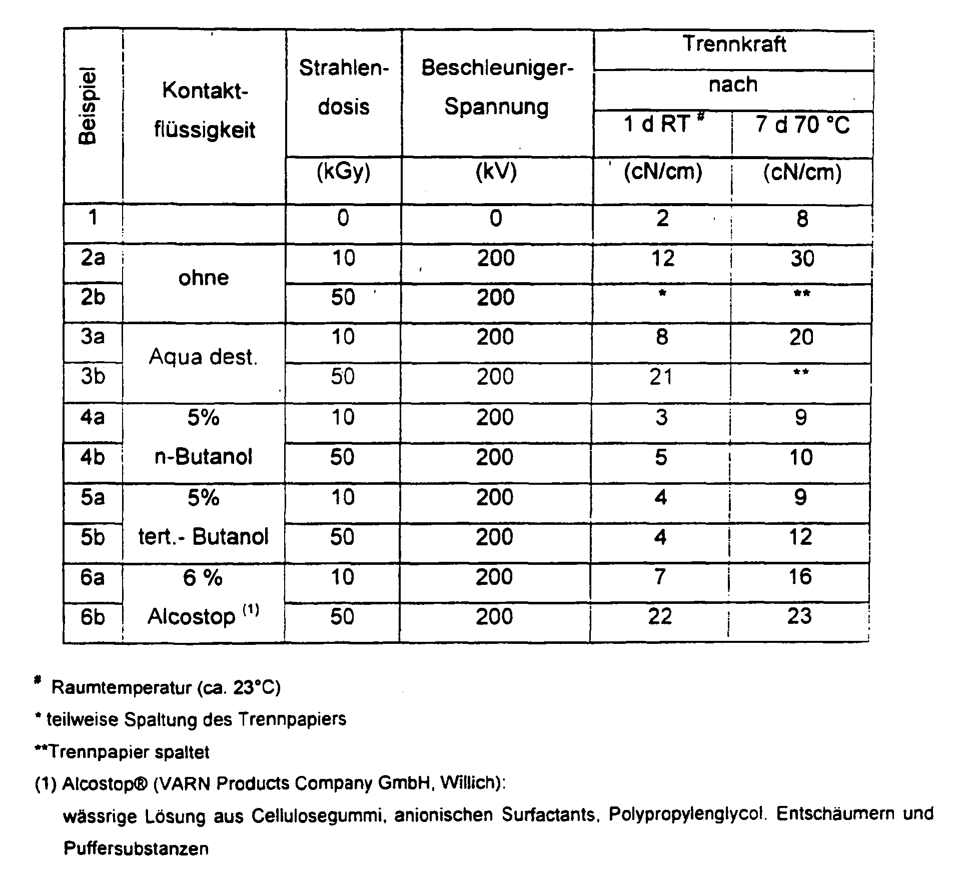

Die Trennkraft war bei dem unbestrahlten Nullmuster (Beispiel 1) sehr gering und stieg auch bei einer Lagerung von 7 Tagen bei 70 °C nicht über 8 cN/cm an.
Bei den elektronenbestrahlten Mustern (Beispiel 2a, 2b) hingegen war ein starker Anstieg der Trennkraft festzustellen. Selbst bei einer Strahlendosis von nur 10 kGy (Beispiel 2a) lag sie bei 12 cN/cm. Durch Lagerung bei 70 °C verstärkte sich dieser Effekt, und stieg nach 7 Tagen auf 30 cN/cm an.

Die Vernetzung mit einer Strahlendosis von 10 kGy ist für viele leistungsfähige Klebebänder in der Praxis jedoch zu gering, daher wurde zusätzlich ein Versuch mit einer Strahlendosis von 50 kGy durchgeführt (Beispiel 2b). Der beobachtete Effekt trat hier noch wesentlich stärker auf. Das Trennmaterial zeigte beim Abrollen deutlich erkennbare Fehlstellen durch Ausrupfungen. Nach Lagerung bei 70 °C spaltete das Trennpapier vollflächig, ein solches Klebeband wäre nicht mehr abrollbar.
Nachdem mit den Referenzproben 2a und 2b die Trägerschädigung nachwiesen worden war, wurde mit der erfinderischen Walzenanordnung eine entsprechende Versuchsreihe mit reinem Wasser als Kontaktmedium durchgeführt. Dazu wurde dasselbe Prüfband wie in den Beispielen 2a und 2b eingesetzt. Die Strahlendosen lagen im Rahmen der Meßgenauigkeit im gleichen Bereich, so daß die Werte unmittelbar miteinander vergleichbar sind.
Die Ergebnisse sind in der Tabelle unter den Beispielen 3a und 3 b erkennbar. Bei einer Strahlendosis von 10 kGy zeigte sich eine Verminderung der Trennpapierschädigung; jedoch führte eine Erhöhung der Strahlendosis auf 50 kGy zu einem deutlichen Anstieg der Trennkraft. Nach 7 Tagen Lagerung bei 70 °C trat wiederum eine Spaltung des Trennpapiers auf, die ein entsprechendes Klebeband unbrauchbar machen würde.
Eine durchgreifende Besserung wurde erreicht, wenn dem Wasser eine geringe Menge Alkylalkohol wie n-Butanol oder tert.-Butanol zugefügt wurde (jeweils als 5%iger Zusatz). Die Anfangswerte nach einem Tag entsprachen praktisch dem unbestrahlten Trennpapier, und auch nach Lagerung bei 70 °C war nur ein geringer Anstieg der Trennkräfte festzustellen. Dieses Verhalten wurde auch durch hohe Strahlendosen von 50 kGy nicht wesentlich verschlechtert. Die erhaltenen Werte lagen in einem für Haftklebebänder gut akzeptablen Bereich.

Das Beispiel 6a. 6b zeigt, daß auch handelsübliche Feuchtmittel, wie sie in der Druckindustrie üblich sind, eingesetzt werden können. Alcostop® der Firma VARN ist eine wäßrige Lösung aus Cellulosegummi, anionischen Surfactants, Polypropylenglycol. Entschäumem und Puffersubstanzen.

Es kann festgestellt werden, daß das erfinderische Verfahren hervorragend geeignet ist, die Rückseitenschädigung von Trägermaterialien bei der Bestrahlung mit Elektronenstrahlen zu vermeiden oder zumindest in einem akzeptablen Bereich zu halten. Die derart hergestellten und vernetzten Haftklebebänder sind für den technischen Einsatz sehr gut geeignet und weisen die Nachteile des Standes der Technik nicht mehr auf.

## Patentansprüche

1. Verfahren zur Vernetzung einer Beschichtung von Haftklebesystemen auf einem mit einer Releaseschicht ausgerüsteten Trägermaterial, wobei
• das auf dem Trägermaterial befindliche Haftklebesystem mittels einer Bestrahlungsvorrichtung mit beschleunigten Elektronen bestrahlt wird,
• das mit dem zu bestrahlenden Haftklebesystem beschichtete Trägermaterial über eine Walze läuft,
**dadurch gekennzeichnet, daß**
• sich während der Bestrahlung zwischen der Walze und dem Trägermaterial ein Kontaktmedium befindet.

2. Verfahren nach Anspruch 1, **dadurch gekennzeichnet, daß**
die Walze temperiert wird, bevorzugt in einem Bereich von -10 °C bis 200 °C, ganz besonders bevorzugt von 5 °C bis 150 °C.

3. Verfahren nach zumindest einem der Ansprüche 1 oder 2, **dadurch gekennzeichnet, daß**
das Kontaktmedium nicht permanent auf der Walze verbleibt, sondern vor dem Bestrahlungsprozeß auf die Walze aufgebracht wird und nach dem Bestrahlungsprozeß von dieser wieder entfernt wird, insbesondere rückstandsfrei.

4. Verfahren nach zumindest einem der vorangehenden Ansprüche, **dadurch gekennzeichnet, daß**
das Kontaktmedium mit dem Trägermaterial in das Verfahren eingebracht wird.

5. Verfahren nach zumindest einem der vorangehenden Ansprüche, **dadurch gekennzeichnet, daß**
als Kontaktmedium eine Flüssigkeit , insbesondere Wasser, bevorzugt versetzt mit einem oder mehreren löslichen oder teilweise löslichen Zusatzstoffen, eingesetzt wird.

6. Verfahren nach zumindest einem der vorangehenden Ansprüche, **dadurch gekennzeichnet, daß**
als Zusatzstoffe Alkylalkohole, Glykole, Ketone, Amine, Carboxylate, wasserlösliche Cellulosederivate, Sulfonate und/oder Tenside eingesetzt werden.

7. Verfahren nach zumindest einem der vorangehenden Ansprüche, **dadurch gekennzeichnet, daß**
das mit dem Haftklebesystem beschichtete Trägermaterial unter Andruck über die Walze läuft.

8. Verfahren nach zumindest einem der vorangehenden Ansprüche, **dadurch gekennzeichnet, daß**
die Oberfläche der Walze elektrisch leitfähig oder halbleitend ist.

9. Verfahren nach zumindest einem der vorangehenden Ansprüche, **dadurch gekennzeichnet, daß**
das Kontaktmedium und/oder die Walze und/oder die Oberfläche der Walze geerdet sind.

10. Verfahren nach zumindest einem der vorangehenden Ansprüche, **dadurch gekennzeichnet, daß**
die Walze eine Oberflächenstruktur besitzt, insbesondere eine Aufrauhung der Oberfläche.

11. Verfahren nach zumindest einem der vorangehenden Ansprüche, **dadurch gekennzeichnet, daß**
die Walze eine Stahlwalze ist, insbesondere eine solche, die eine Beschichtung zur Verbesserung der Korrosionsbeständigkeit und/oder der Benetzbarkeit trägt, wobei die Beschichtung insbesondere aus Metallen, Metalloxiden oder Keramik besteht.

12. Verfahren nach zumindest einem der vorangehenden Ansprüche, **dadurch gekennzeichnet, daß** das Kontaktmedium mittels eines Fluidauftragswerks auf die Walze gebracht wird.

13. Verfahren nach zumindest einem der vorangehenden Ansprüche, **dadurch gekennzeichnet, daß** das Fluidauftragswerk temperierbar ist.

## Claims

1. Process for crosslinking a coating of pressure-sensitive adhesive systems on a backing material equipped with a release layer,
• the pressure-sensitive adhesive system present on the backing material being irradiated with accelerated electrons by means of an irradiation means,
• the backing material coated with the pressure-sensitive adhesive system to be irradiated running via a roller,
**characterized in that**
• there is a contact medium between the roller and the backing material during irradiation.

2. Process according to Claim 1, **characterized in that** the roller is thermally conditioned, preferably in a range from -10°C to 200°C, with very particular preference to 5°C to 150°C.

3. Process according to at least one of Claims 1 or 2, **characterized** on that the contact medium does not remain permanently on the roller but instead is applied to the roller before the irradiation operation and removed from it again after the irradiation operation, especially without residue.

4. Process according to at least one of the preceding claims, **characterized in that** the contact medium is introduced into the process with the backing material.

5. Process according to at least one of the preceding claims, **characterized in that** as contact medium a liquid, especially water, preferably admixed with one or more soluble or partly soluble additives, is used.

6. Process according to at least one of the preceding claims, **characterized in that** alkyl alcohols, glycols, ketones, amines, carboxylates, water-soluble cellulose derivatives, sulfonates and/or surfactants are used as additives.

7. Process according to at least one of the preceding claims, **characterized in that** the backing material coated with the pressure-sensitive adhesive system runs over the roller under applied pressure.

8. Process according to at least one of the preceding claims, **characterized in that** the surface of the roller is electrically conductive or semiconducting.

9. Process according to at least one of the preceding claims, **characterized in that** the contact medium and/or the roller and/or the surface of the roller are earthed.

10. Process according to at least one of the preceding claims, **characterized in that** the roller possesses a surface texture, in particular a roughening of the surface.

11. Process according to at least one of the preceding claims, **characterized in that** the roller is a steel roller, especially one which carries the coating for improving the corrosion resistance and/or wettability, the coating being composed in particular of metals, metal oxides or ceramic.

12. Process according to at least one of the preceding claims, **characterized in that** the contact medium is applied to the roller by means of a fluid applicator.

13. Process according to at least one of the preceding claims, **characterized in that** the fluid applicator is thermally conditionable.

## Revendications

1. Procédé pour la réticulation d'un revêtement de systèmes autoadhésifs sur un matériau support apprêté avec une couche antiadhésive, où
- le système autoadhésif se trouvant sur le matériau support est irradié au moyen d'un dispositif d'irradiation avec des électrons accélérés,
- le matériau support revêtu du système autoadhésif à irradier passe sur un cylindre,
**caractérisé en ce que**
- pendant l'irradiation, un milieu de contact se trouve entre le cylindre et le matériau support.

2. Procédé selon la revendication 1, **caractérisé en ce que** la température du cylindre est équilibrée, de préférence dans une plage de -10°C à 200°C, de manière tout particulièrement préférée de 5°C à 150°C.

3. Procédé selon au moins l'une quelconque des revendications 1 ou 2, **caractérisé en ce que** le milieu de contact ne reste pas en permanence sur le cylindre, mais est appliqué avant le processus d'irradiation sur le cylindre et à nouveau éliminé de celui-ci après le processus d'irradiation, en particulier sans résidus.

4. Procédé selon au moins l'une des revendications précédentes, **caractérisé en ce que** le milieu de contact est introduit dans le procédé avec le matériau support.

5. Procédé selon au moins l'une des revendications précédentes, **caractérisé en ce qu'**on utilise comme milieu de contact un liquide, en particulier de l'eau, de préférence mélangée avec un ou plusieurs additifs solubles ou partiellement solubles.

6. Procédé selon au moins l'une des revendications précédentes, **caractérisé en ce qu'**on utilise comme additifs des alcools alkyliques, des glycols, des cétones, des amines, des carboxylates, des dérivés de cellulose solubles dans l'eau, des sulfonates et/ou des agents tensioactifs.

7. Procédé selon au moins l'une des revendications précédentes, **caractérisé en ce que** le matériau support revêtu du système autoadhésif passe sur le cylindre en étant pressé.

8. Procédé selon au moins l'une des revendications précédentes, **caractérisé en ce que** la surface du cylindre est électriquement conductrice ou semiconductrice.

9. Procédé selon au moins l'une des revendications précédentes, **caractérisé en ce que** le milieu de contact et/ou le cylindre et/ou la surface du cylindre sont raccordés à la terre.

10. Procédé selon au moins l'une des revendications précédentes, **caractérisé en ce que** le cylindre présente une structure de surface, en particulier une rugosité de surface.

11. Procédé selon au moins l'une des revendications précédentes, **caractérisé en ce que** le cylindre est un cylindre d'acier, en particulier un cylindre qui porte un revêtement pour améliorer la résistance à la corrosion et/ou l'aptitude au mouillage, ce revêtement étant de préférence constitué par des métaux, des oxydes métalliques ou de la céramique.

12. Procédé selon au moins l'une des revendications précédentes, **caractérisé en ce que** le milieu de contact est appliqué sur le cylindre au moyen d'un dispositif d'application de fluides.

13. Procédé selon au moins l'une des revendications précédentes, **caractérisé en ce que** la température du dispositif d'application de fluides peut être équilibrée.
